# EUROPÄISCHE PATENTSCHRIFT

(11) **EP 1 921 206 B1**
(45) Veröffentlichungstag und Bekanntmachung des Hinweises auf die Patenterteilung: **05.05.2010**
(21) Anmeldenummer: 08000366.8
(22) Anmeldetag: 28.07.2004
(51) Int. Cl.: D21F 1/40, D21G 1/02

(54) **Breitstreckwalze**
Spreading roller
Rouleau élargisseur

(30) Priorität: 05.09.2003 DE 10341119
(43) Veröffentlichungstag der Anmeldung: 14.05.2008
(62) Teilanmeldung aus: 04103604.7
(73) Patentinhaber: Voith Patent GmbH, 89522 Heidenheim (DE)
(72) Erfinder: Schneid, Josef, 88267 Vogt (DE)

(56) Entgegenhaltungen:
- EP-B- 0 932 723
- WO-A-99/09329

## Beschreibung

Die Erfindung betrifft eine Breitstreckwalze für eine Maschine zur Herstellung einer Materialbahn, insbesondere Papier- oder Kartonbahn, der im Oberbegriff des Anspruchs 1 angegebenen Art.

Insbesondere bei der Herstellung von Papier- oder Kartonbahnen werden zum Breitstrecken der jeweiligen Bahn Walzen verwendet, die eine bestimmte Durchbiegung oder Krümmung aufweisen.

Eine Breitstreckwalze der eingangs genannten Art ist beispielsweise in der EP 0 932 723 B1 beschrieben. Die bekannte Breitstreckwalze umfasst ein gleichförmiges Walzenrohr, in das zwei axial voneinander beabstandete Lagermit jeweils zwei Lagerstellen für den betreffenden Walzenrohrendbereich eingesetzt sind. Dabei sind die beiden einem jeweiligen Walzenrohrendbereich zugeordneten Lagerstellen in derselben Radiallage angeordnet. Durch Ablenkung der beiden Lager wird das Walzenrohr durchgebogen bzw. gekrümmt, so dass die über die Breitstreckwalze geführte Papierbahn eine Breitstreckwirkung erfährt. Ein gleichförmiger Biegeträger erfährt nun aber nur bei einem gleichmäßigen Biegemoment auch eine gleichmäßige Krümmung über seine gesamte Länge. Im vorliegenden Fall weist der Verlauf des Biegemoments an den Lagerstellen der beiden Lager angesichts der Einleitung von Querkräften jeweils eine Unstetigkeit auf, was zur Folge hat, dass sich auch eine ungleichförmige Krümmung einstellt.

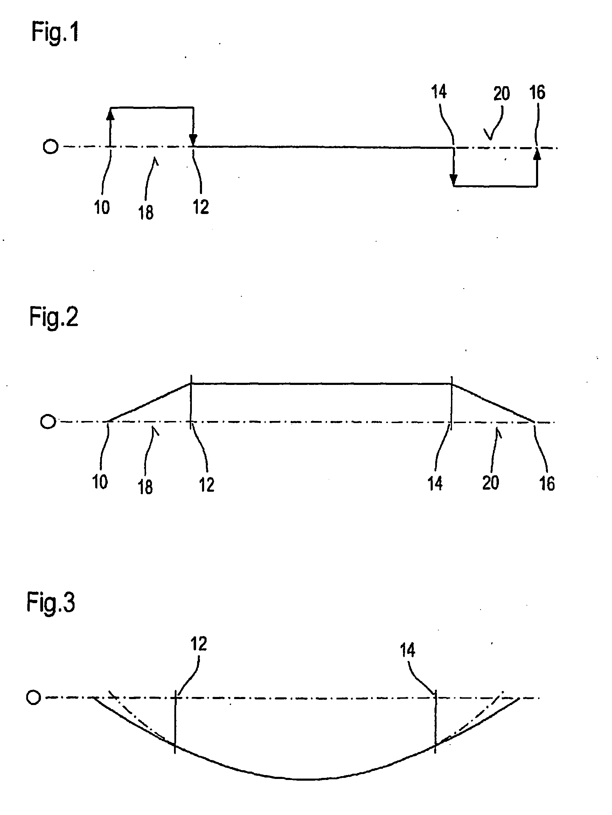

Der sich bei dieser aus der EP 0 932 723 B1 bekannten Breitstreckwalze über die Walzenlänge ergebende Querkraftverlauf ist in der Fig. 1 der Zeichnung schematisch wiedergegeben. Dabei werden Querkräfte an den Lagerstellen 10, 12; 14, 16 der beiden Lager 18, 20 von innen in das Walzenrohr eingeleitet.

Fig. 2 zeigt den sich daraus ergebenden Biegeelementverlauf. Es ist zu erkennen, dass sich an den Lagerstellen 10, 12; 14, 16 der beiden Lager 18, 20 angesichts der Einleitung der genannten Querkräfte Unstetigkeiten ergeben.

Fig. 3 zeigt die daraus resultierende Biegelinie der bekannten Breitstreckwalze. Bei der so entstehenden Biegelinie nimmt die Krümmung axial außerhalb der Lagerstellen 12, 14 ab, was an den besonders wichtigen Bahnrändern zu einem Abfall der Breitstreckwirkung führt und demzufolge einen Faltenlauf mit sich bringt. Bei der bekannten Breitstreckwalze wird also durch Unstetigkeiten die Breitstreckwirkung negativ beeinflusst, und die Walze muss so breit gebaut werden, dass die betreffende Lagerstelle axial außerhalb des genutzten Bahnführungsbereichs liegt.

Bei einer aus der WO 99/09329 A bekannten Breitstreckwalze der eingangs genannten Art ist der das Walzenrohr bildende Walzenmantel an seinen beiden Enden jeweils über zwei innenliegende Lagerstellen drehbar auf einer drehfesten Achse gelagert, wobei die Walzenrohrenden jeweils durch eine innere Buchse verstärkt sein können. Die beiden einem jeweiligen Walzenrohrendbereich zugeordneten Lagerstellen sind wieder in derselben Radiallage vorgesehen.

Der Erfindung liegt die Aufgabe zugrunde, eine verbesserte Breitstreckwalze der eingangs genannten Art zu schaffen, bei der die zuvor genannten Nachteile des Standes der Technik beseitigt sind. Dabei soll insbesondere innerhalb des genutzten Bahnführungsbereichs eine gleichförmige Krümmung bei kompakten Breitenabmessungen erreicht werden.

Erfindungsgemäß wird diese Aufgabe dadurch gelöst, dass die Biegemomente im Bereich der beiden Walzenrohrenden jeweils über zumindest zwei unterschiedliche Radiallagen innerhalb des Walzenrohres eingeleitet werden, wobei einem jeweiligen Walzenrohrendbereich jeweils wenigstens zwei in unterschiedlichen Radiallagen vorgesehene Lagerstellen zugeordnet sind.

Ist die Steifigkeit des Walzenrohres über dessen gesamte Länge gleichförmig, so ergibt sich angesichts der Einleitung der Biegemomente über die stirnseitigen Walzenrohrenden ein gleich bleibender Verlauf des Biegemomentes über die gesamte Länge des Walzenrohres. Entsprechend ist auch die Krümmung über die gesamte Rohrlänge gleichförmig und ohne Abfall im Randbereich.

Ist die Steifigkeit des Walzenrohres über dessen Länge dagegen ungleichförmig und zu den Walzenrohrenden hin abfallend, so steigt die Krümmung zu den Walzenenden hin an, was sich günstig auf die Breitstreckwirkung im Randbereich der Materialbahn auswirkt.

Bei einer bevorzugten praktischen Ausführungsform der erfindungsgemäßen Breitstreckwalze entspricht ein jeweiliger Endbereich abfallender Steifigkeit bis etwa einem Drittel der Gesamtlänge des Walzenrohres.

Das Walzenrohr kann beispielsweise aus faserverstärktem Kunststoff bestehen. Insbesondere in diesem Fall kann die Steifigkeit des Walzenrohres zumindest teilweise durch entsprechend veränderte Materialeigenschaften eingestellt sein.

Das Walzenrohr kann beispielsweise aber auch aus einem homogenen Material wie zum Beispiel Metall oder dergleichen bestehen. Insbesondere in diesem Fall kann die Steifigkeit des Walzenrohres zumindest teilweise durch entsprechend veränderte geometrische Abmessungen eingestellt sein.

Die den Walzenrohrendbereichen zugeordneten Lagerstellen sind bevorzugt zur Einstellung der Krümmung des Walzenrohres entsprechend verstellbar. Dabei können die Lagerstellen wieder über Kraftelemente verstellt werden.

Vorteilhafterweise sind die Lagerstellen eines jeweiligen Walzenrohrendbereichs zur Einstellung der Krümmung des Walzenrohres aus einer neutralen Lage um eine gemeinsame Schwenkachse entsprechend verschwenkbar.

Bei einer bevorzugten praktischen Ausführungsform der erfindungsgemäßen Breitstreckwalze fällt die Steifigkeit des Walzenrohres zu den Walzenrohrenden hin ab. Dabei kann die Steifigkeit in einem jeweiligen Walzenrohrendbereich insbesondere ausgehend vom Bereich einer axial innen liegenden Lagerstelle axial nach außen abfallen. Dabei kann die Steifigkeit außerhalb des inneren Lagers insbesondere stetig abfallen.

Von Vorteil ist insbesondere, wenn die Steifigkeit zwischen zwei in unterschiedlichen Radiallagen vorgesehenen Lagerstellen eines jeweiligen Walzenrohrendbereichs so reduziert ist, dass der Abfall des Biegemomentverlaufs zumindest im wesentlichen kompensiert und entsprechend eine zumindest im wesentlichen gleichförmige Krümmung des Walzenrohres erreicht wird.

Die Steifigkeit zwischen zwei in unterschiedlichen Radiallagen vorgesehenen Lagerstellen eines jeweiligen Walzenrohrendbereichs kann jedoch auch überproportional so reduziert sein, dass sich im Walzenrohrendbereich im Vergleich zum mittleren Walzenrohrbereich eine erhöhte Krümmung ergibt.

Das Walzenrohr kann beispielsweise wieder aus faserverstärktem Kunststoff bestehen. Insbesondere in diesem Fall kann die Steifigkeit des Walzenrohres zumindest teilweise durch entsprechend veränderte Materialeigenschaften eingestellt sein.

Das Walzenrohr kann beispielsweise aber auch wieder aus einem homogenen Material wie zum Beispiel Metall oder dergleichen bestehen. Insbesondere in diesem Fall kann die Steifigkeit des Walzenrohres zumindest teilweise durch entsprechend veränderte geometrische Abmessungen eingestellt sein.

Bei einer zweckmäßigen praktischen Ausführungsform der erfindungsgemäßen Breitstreckwalze sind die Walzenrohrendbereiche über die Lagerstellen jeweils auf einem Walzenabstützelement drehbar gelagert, das zur Einstellung der Krümmung des Walzenrohres um eine Schwenkachse entsprechend verschwenkbar ist.

Die Erfindung wird im Folgenden anhand von Ausführungsbeispielen unter Bezugnahme auf die Zeichnung näher beschreiben; in dieser zeigen:
- Fig. 1: den sich über die Länge einer aus der EP 0 932 723 B1 bekannten Breitstreckwalze ergebenden Querkraftverlauf,
- Fig. 2: den sich über die Länge der aus der EP 0 932 723 B bekannten Breitstreckwalze ergebenden Biegemomentverlauf,
- Fig. 3: die sich für die aus der EP 0 932 723 B1 bekannte Breitstreckwalze ergebende Biegelinie,
- Fig. 4: eine schematische Teildarstellung einer Breitstreckwalze, bei der die Biegemomente ausschließlich über die stirnseitigen Walzenrohrenden eingeleitet werden und bei der die Lagerstellen außerhalb des Walzenrohres angeordnet sind,
- Fig. 5: eine schematische Teildarstellung einer weiteren Breitstreckwalze, bei der die Biegemomente ausschließlich über die stirnseitigen Walzenrohrenden eingeleitet werden, wobei die Lagerstellen im vorliegenden Fall jedoch innerhalb des Walzenrohres angeordnet sind,
- Fig. 6: eine schematische Teildarstellung einer Breitstreckwalze, bei der die Biegemomente ausschließlich über die stirnseitigen Walzenrohrenden eingeleitet werden, wobei im vorliegenden Fall einem jeweiligen Lagerträger zwei in unterschiedlichen Radiallagen vorgesehene Lagerstellen zugeordnet sind,
- Fig. 7: eine schematische Darstellung eines einem jeweiligen Lagerträger der Breitstreckwalze gemäß Fig. 6 zugeordneten radial verschiebbaren Führungsringes zum Verstellen der Lagerstellen und
- Fig. 8: eine schematische Teildarstellung einer Ausführungsform der erfindungsgemäßen Breitstreckwalze, bei der die Biegemomente im Bereich der beiden Walzenrohrenden jeweils über zumindest zwei unterschiedliche Radiallagen innerhalb des Walzenrohres eingeleitet werden.

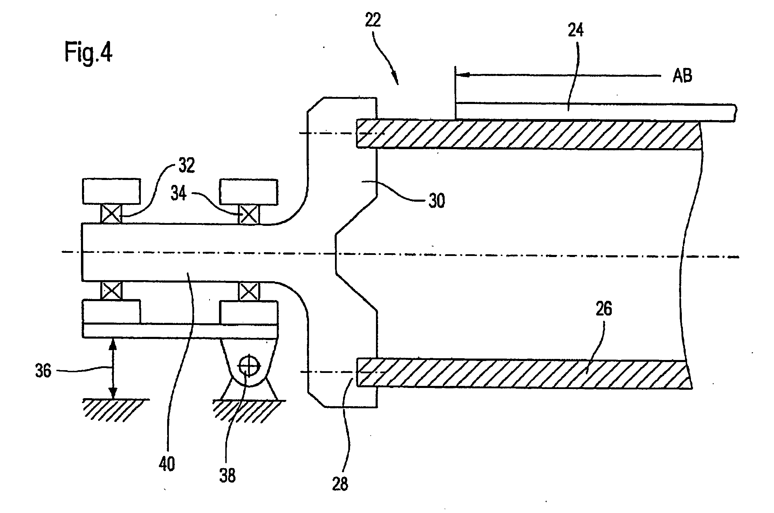

Bei den Breitstreckwalzen nach den Figuren 4 bis 7 handelt es sich nicht um Ausführungsbeispiele der Erfindung.

Fig. 4 zeigt in schematischer Darstellung eine Breitstreckwalze 22 für eine Maschine zur Herstellung einer Materialbahn 24, bei der es sich insbesondere um eine Papier- oder Kartonbahn handeln kann.

Die Breitstreckwalze 22 umfasst ein Walzenrohr 26, dem Mittel zur Einleitung von Biegemomenten zugeordnet sind, wobei im vorliegenden Fall die Biegemomente ausschließlich über die stirnseitigen Enden 28 des Walzenrohres 26 eingeleitet werden.

Die Mittel zur Einleitung von Biegemomenten umfassen den stirnseitigen Enden 28 des Walzenrohres 26 zugeordnete Lagerträger 30. Dabei sind diese insbesondere flanschartigen Lagerträger 30 fest mit den stirnseitigen Walzenrohrenden 28 verbunden. Zur Einstellung der Krümmung des Walzenrohres 26 sind die den Lagerträgern 30 zugeordneten Lagerstellen 32, 34 entsprechend verstellbar. Die Verstellung der Lagerstellen 32, 34 erfolgt über Kraftelemente 36.

Wie anhand der Fig. 4 zu erkennen ist, sind im vorliegenden Fall einem jeweiligen Lagerträger 30 jeweils zwei axial beabstandete Lagerstellen 32, 34 zugeordnet. Dabei sind die Lagerstellen 32, 34 eines jeweiligen Lagerträgers 30 zur Einstellung der Krümmung des Walzenrohres 26 aus einer neutralen Lage um eine gemeinsame Schwenkachse 38 verschwenkbar.

Wie anhand der Fig. 4 zu erkennen ist, sind die den Lagerträgern 30 zugeordneten Lagerstellen 32, 34 im vorliegenden Fall axial außerhalb des Walzenrohres 26 angeordnet. Dabei umfassen die Lagerträger 30 jeweils einen allgemein axial nach außen weisenden Ansatz 40, auf dessen radial außen liegender Seite die Lagerstellen 32, 34 vorgesehen sind.

Das Walzenrohr 26 ist also an seinen stirnseitigen Enden 28 jeweils mit einem flanschartigen Lagerträger 30 fest verbunden. Die für einen jeweiligen Lagerträger 30 vorgesehenen zwei Lagerstellen 32, 34 können durch geeignete Kraftelemente 36 um eine gemeinsame Schwenkachse 38 aus einer neutralen Lage abgelenkt werden und ermöglichen damit eine einstellbare Krümmung des Walzenrohres 26.

Die Biegemomente werden jeweils am Ende des Walzenrohres 26 eingeleitet, so dass ein gleich bleibender Verlauf des Biegemoments über die gesamte Länge des Walzenrohres 26 erreicht wird. Entsprechend ist auch die Krümmung über die gesamte Länge des Walzenrohres 26 gleichförmig und ohne Abfall im Randbereich.

Wählt man die Steifigkeit des Walzenrohres 26 über dessen Länge nicht gleichförmig, sondern zu den Enden hin abfallend, so steigt die Krümmung zu den Enden des Walzenrohres 26 hin an, was sich günstig auf die Breitstreckwirkung im Randbereich der Materialbahn 24 auswirkt. Dieser Randbereich kann beispielsweise jeweils bis etwa ein Drittel der Länge des Walzenrohres 26 betragen.

Insbesondere bei Rohrkörpern aus faserverstärkten Kunststoffen kann die Veränderung der Materialeigenschaften zum Einstellen der Steifigkeit herangezogen werden. Bei Rohrkörpern aus homogenen Materialien, zum Beispiel Metallen, wird die Steifigkeit durch eine entsprechende Veränderung der geometrischen Abmessungen angepasst.

Es kann also insbesondere eine Breitstreckwalze 22 mit innerhalb des genutzten Bahnführungsbereichs AB gleichförmiger Krümmung bei kompakten Breitenabmessungen verwirklicht werden, wobei zur Verbesserung der Breitstreckwirkung im Randbereich die Krümmung dort auch größer ausgeführt werden kann.

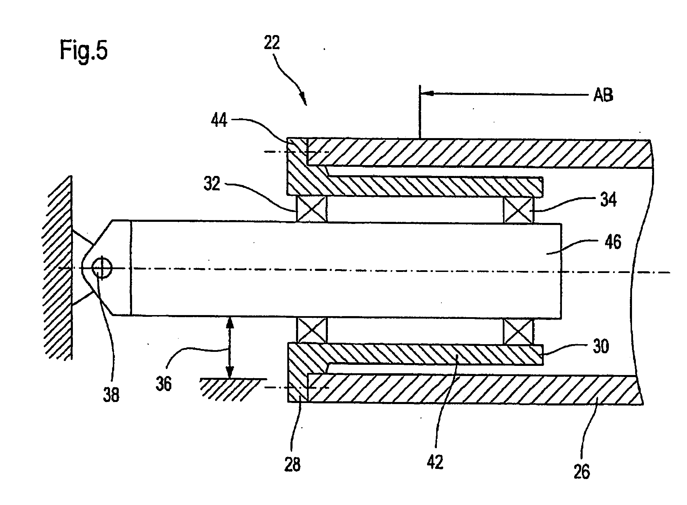

Während bei der Ausführungsform gemäß Fig. 4 die Lagerstellen 32, 34 axial außerhalb des Walzenrohres 26 vorgesehen sind, sind diese Lagerstellen 32, 34 bei der in der Fig. 5 wiedergegebenen Breitstreckwalze axial innerhalb des Walzenrohres 26 angeordnet. Auch im vorliegenden Fall werden die Biegemomente wieder ausschließlich über die stirnseitigen Walzenrohrenden 28 eingeleitet.

Wie anhand der Fig. 5 zu erkennen ist, umfassen die Lagerträger 30 im vorliegenden Fall jeweils einen sich allgemein axial ins Innere des Walzenrohres 26 erstreckenden Rohransatz 42, der an seinem äußeren Ende mit einem Bund 44 versehen ist, über den er fest mit dem betreffenden stirnseitigen Walzenrohrende 28 verbunden ist. Die Lagerstellen 32, 34 sind radial innen am Rohransatz 42 vorgesehen.

Die Lagerträger 30 sind über die Lagerstellen 32, 34 jeweils auf einem Walzenabstützelement 46 drehbar gelagert. Zur Einstellung der Krümmung des Walzenrohres 26 sind diese Walzenabstützelemente 46 jeweils um eine Schwenkachse 38 entsprechend verschwenkbar. Das Verschwenken kann wieder über Kraftelemente 36 erfolgen.

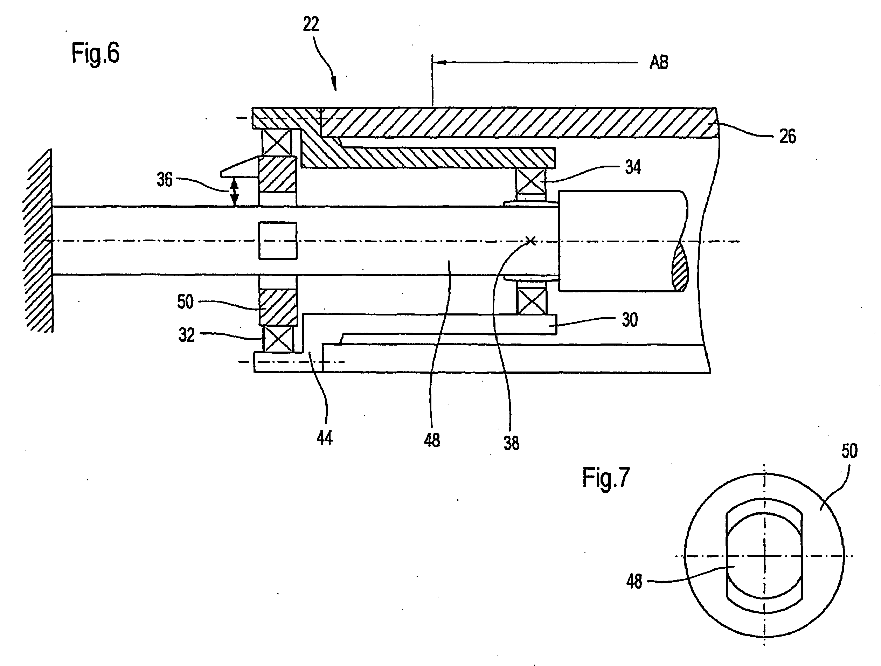

Fig. 6 zeigt in schematischer Darstellung eine weitere Breitstreckwalze 22 mit stirnseitiger Einleitung der Biegemomente. Im vorliegenden Fall sind die Lagerträger 30 über die Lagerstellen 32, 34 jeweils auf einem feststehenden Walzenabstützelement 48 drehbar gelagert. Zur Einstellung der Krümmung des Walzenrohres 26 sind die Lagerstellen 32, 34 bezüglich des feststehenden Walzenabstützelements 48 um eine im Bereich der axial inneren Lagerstelle 34 definierte gemeinsame Schwenkachse 38 verschwenkbar.

Wie anhand der Fig. 6 zu erkennen ist, sind im vorliegenden Fall einem jeweiligen Lagerträger 30 zwei in unterschiedlichen Radiallagen vorgesehene Lagerstellen 32, 34 zugeordnet.

Dabei liegt die axial äußere Lagerstelle 32 radial weiter außen als die axial innere Lagerstelle 34. Dazu ist der Lagerträger 30 an seinem axial äußeren Ende mit einer entsprechenden Querschnittserweiterung versehen, in deren Bereich die radial ebenfalls wieder innen am Lagerträger 30 liegende Lagerstelle 32 angeordnet ist. Im Bereich der Querschnittserweiterung besitzt der Lagerträger 30 einen Bund 44, über den er fest mit dem Walzenrohr 26 verbunden ist. Über die axial äußere Lagerstelle 32 ist das axial äußere Ende des Lagerträgers 30 schließlich drehbar auf dem radial verschiebbaren Führungsring 50 gelagert.

Fig. 7 zeigt in schematischer Darstellung einen einem jeweiligen Lagerträger 30 der Breitstreckwalze 22 gemäß Fig. 6 zugeordneten, radial auf dem Walzenabstützelement 48 verschiebbaren Führungsring 50 zum Verstellen der Lagerstellen 32, 34. Das entsprechende Verschieben des Führungsringes 30 kann wieder über ein oder mehrere Kraftelemente 36 erfolgen. Über den radial verschiebbaren Führungsring 50 wird die axial äußere Lagerstelle 32 entsprechend radial verstellt, wodurch das die beiden Lagerstellen 32, 34 umfassende Lager entsprechend um die im Bereich der axial inneren Lagerstelle 34 definierte Schwenkachse 38 verschwenkt wird.

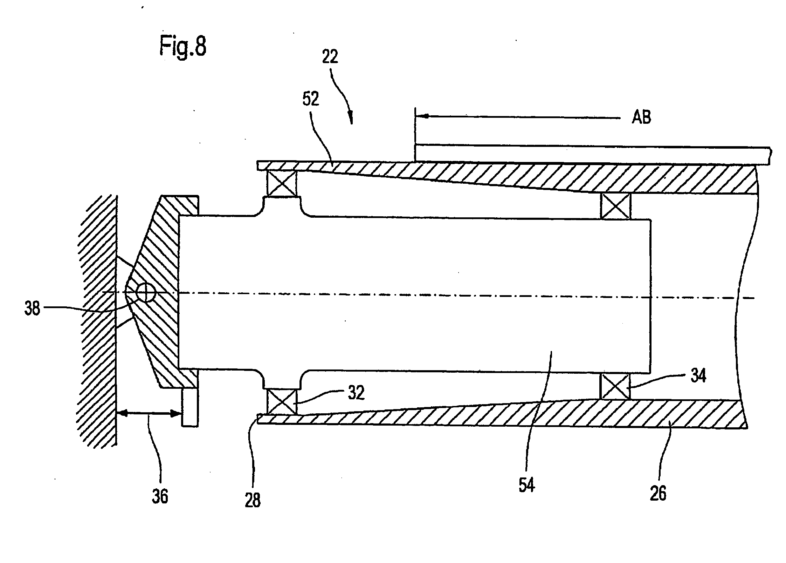

Fig. 8 zeigt in schematischer Teildarstellung eine Ausführungsform der erfindungsgemäßen Breitstreckwalze 22, bei der die Biegemomente im Bereich der beiden Walzenrohrenden 52 jeweils über zumindest zwei unterschiedliche Radiallagen innerhalb des Walzenrohres 26 eingeleitet werden. Die Mittel zur Einleitung der Biegemomente umfassen den Walzenrohrendbereichen 52 zugeordnete Lagerstellen 32, 34, die zur Einstellung der Krümmung des Walzenrohres 26 entsprechend verstellbar sind. Zur Verstellung der Lagerstellen 32, 34 sind wieder Kraftelemente 36 vorgesehen.

Wie anhand der Fig. 8 zu erkennen ist, sind einem jeweiligen Walzenrohrendbereich 52 jeweils zwei in unterschiedlichen Radiallagen vorgesehene Lagerstellen 32, 34 zugeordnet, wobei die axial äußere Lagerstelle 32 radial weiter außen liegt als die axial innere Lagerstelle 34.

Die beiden Lagerstellen 32, 34 eines jeweiligen Walzenrohrendbereichs 52 sind zur Einstellung der Krümmung des Walzenrohres 26 aus einer neutralen Lage um eine gemeinsame Schwenkachse 38 verschwenkbar.

Bevorzugt fällt die Steifigkeit des Walzenrohres 26 zu den stirnseitigen Walzenrohrenden 28 hin ab. Dabei kann, wie in der Fig. 8 gezeigt, in einem jeweiligen Walzenrohrendbereich 52 die Steifigkeit jeweils ausgehend vom Bereich der axial innen liegenden Lagerstelle 34 axial nach außen abfallen.

Die Steifigkeit zwischen den beiden in unterschiedlichen Radiallagen vorgesehenen Lagerstellen 32, 34 kann insbesondere so reduziert sein, dass der Abfall des Biegemomentverlaufs zumindest im wesentlichen kompensiert und entsprechend eine zumindest im wesentlichen gleichförmige Krümmung des Walzenrohres 26 erhalten wird.

Es ist beispielsweise auch möglich, die Steifigkeit zwischen den beiden in unterschiedlichen Radiallagen vorgesehenen Lagerstellen 32, 34 überproportional so zu reduzieren, dass sich im Walzenrohrendbereich 52 im Vergleich zum mittleren Walzenrohrbereich eine erhöhte Krümmung ergibt.

Das Walzenrohr 26 kann beispielsweise wieder aus faserverstärktem Kunststoff bestehen. Insbesondere in diesem Fall kann die Steifigkeit des Walzenrohrs 26 zumindest teilweise durch entsprechend veränderte Materialeigenschaften eingestellt sein. Das Walzenrohr 26 kann beispielsweise auch wieder aus einem homogenen Material wie zum Beispiel Metall oder dergleichen bestehen. Insbesondere in diesem Fall kann die Steifigkeit des Walzenrohres 26 zumindest teilweise durch entsprechend veränderte geometrische Abmessungen eingestellt sein, wie dies bei der in Fig. 8 gezeigten Ausführungsform der Fall ist, bei der beispielsweise die Wandstärke des Walzenrohres 26 entsprechend reduziert ist.

Bei der vorliegenden Ausführungsform gemäß Fig. 8 sind die Walzenrohrendbereiche 52 über die beiden Lagerstellen 32, 34 jeweils auf einem Walzenabstützelement 54 drehbar gelagert, das zur Einstellung der Krümmung des Walzenrohres 26 um die Schwenkachse 38 entsprechend verschwenkbar ist.

Bei der Ausführungsform der erfindungsgemäßen Breitstreckwalze gemäß der Fig. 8 wird der Abfall des Biegemomentverlaufs zwischen den Lagerstellen 32, 34 also beispielsweise durch entsprechende Reduzierung der Steifigkeit des Rohrkörpers kompensiert, so dass eine gleichförmige Krümmung entsteht. Der Rohrkörper ist demnach nicht gleichförmig. Durch eine überproportionale Reduzierung der Steifigkeit kann auch hier die Krümmung im Randbereich erhöht werden.

### Bezugszeichenliste

- 10: Lagerstelle
- 12: Lagerstelle
- 14: Lagerstelle
- 16: Lagerstelle
- 18: Lager
- 20: Lager
- 22: Breitstreckwalze
- 24: Materialbahn
- 26: Walzenrohr
- 28: stirnseitiges Walzenrohrende
- 30: Lagerträger
- 32: Lagerstelle
- 34: Lagerstelle
- 36: Kraftelement
- 38: Schwenkachse
- 40: Ansatz
- 42: Rohransatz
- 44: Bund
- 46: Walzenabstützelement
- 48: Walzenabstützelement
- 50: Führungsring
- 52: Walzenrohrende, Walzenrohrendbereich
- 54: Walzenabstützelement

- AB: genutzter Bahnführungsbereich

## Patentansprüche

1. Breitstreckwalze (22) für eine Maschine zur Herstellung einer Materialbahn (24), insbesondere Papier- oder Kartonbahn, mit einem Walzenrohr (26) und diesem zugeordneten Mitteln zur Einleitung von Biegemomenten im Bereich der beiden Walzenrohrenden (52),
**dadurch gekennzeichnet,**
**dass** die Biegemomente im Bereich der beiden Walzenrohrenden (52) jeweils über zumindest zwei unterschiedliche Radiallagen innerhalb des Walzenrohres (26) eingeleitet werden, wobei einem jeweiligen Walzenrohrendbereich (52) jeweils wenigstens zwei in unterschiedlichen Radiallagen vorgesehene Lagerstellen (32, 34) zugeordnet sind.

2. Breitstreckwalze nach Anspruch 1,
**dadurch gekennzeichnet,**
**dass** die den Walzenrohrendbereichen (52) zugeordneten Lagerstellen (32, 34) zur Einstellung der Krümmung des Walzenrohres (26) entsprechend verstellbar sind.

3. Breitstreckwalze nach Anspruch 2,
**dadurch gekennzeichnet,**
**dass** die Lagerstellen (32, 34) über Kraftelemente (36) verstellbar sind.

4. Breitstreckwalze nach einem der vorhergehenden Ansprüche,
**dadurch gekennzeichnet ,**
**dass** die Lagerstellen (32, 34) eines jeweiligen Walzenrohrendbereichs (52) zur Einstellung der Krümmung des Walzenrohres (26) aus einer neutralen Lage um eine gemeinsame Schwenkachse (38) verschwenkbar sind.

5. Breitstreckwalze nach einem der vorhergehenden Ansprüche,
**dadurch gekennzeichnet ,**
**dass** die Steifigkeit des Walzenrohres (26) zu den Walzenrohrenden (28) hin abfällt.

6. Breitstreckwalze nach Anspruch 5,
**dadurch gekennzeichnet ,**
**dass** in einem jeweiligen Walzenrohrendbereich (52) die Steifigkeit ausgehend vom Bereich einer axial innen liegenden Lagerstelle (34) axial nach außen abfällt.

7. Breitstreckwalze nach einem der vorhergehenden Ansprüche,
**dadurch gekennzeichnet ,**
**dass** die Steifigkeit zwischen zwei in unterschiedlichen Radiallagen vorgesehenen Lagerstellen (32, 34) eines jeweiligen Walzenrohrendbereichs so reduziert ist, dass der Abfall des Biegemomentverlaufs zumindest im wesentlichen kompensiert und entsprechend eine zumindest im wesentlichen gleichförmige Krümmung des Walzenrohres (26) gegeben ist.

8. Breitstreckwalze nach einem der Ansprüche 1 bis 6,
**dadurch gekennzeichnet ,**
**dass** die Steifigkeit zwischen zwei in unterschiedlichen Radiallagen vorgesehenen Lagerstellen (32, 34) eines jeweiligen Walzenrohrendbereichs (52) überproportional so reduziert ist, dass sich im Walzenrohrendbereich (52) im Vergleich zum mittleren Walzenrohrbereich eine erhöhte Krümmung ergibt.

9. Breitstreckwalze nach einem der vorhergehenden Ansprüche,
**dadurch gekennzeichnet ,**
**dass** das Walzenrohr (26) aus faserverstärktem Kunststoff besteht.

10. Breitstreckwalze nach einem der vorhergehenden Ansprüche,
**dadurch gekennzeichnet ,**
**dass** die Steifigkeit des Walzenrohres (26) zumindest teilweise durch entsprechend veränderte Materialeigenschaften eingestellt ist.

11. Breitstreckwalze nach einem der vorhergehenden Ansprüche,
**dadurch gekennzeichnet ,**
**dass** das Walzenrohr (26) aus einem homogenen Material wie z.B. Metall besteht.

12. Breitstreckwalze nach einem der vorhergehenden Ansprüche,
**dadurch gekennzeichnet ,**
**dass** die Steifigkeit des Walzenrohres (26) zumindest teilweise durch entsprechend veränderte geometrische Abmessungen eingestellt ist.

13. Breitstreckwalze nach einem der vorhergehenden Ansprüche,
**dadurch gekennzeichnet ,**
**dass** die Walzenrohrendbereiche (52) über die Lagerstellen (32, 34) jeweils auf einem Walzenabstützelement (54) drehbar gelagert sind, das zur Einstellung der Krümmung des Walzenrohres (26) um eine Schwenkachse (38) entsprechend verschwenkbar ist.

## Claims

1. Spreader roll (22) for a machine for producing a web (24), in particular a paper or board web, having a roll tube (26) and means assigned to the latter to introduce bending moments in the region of the two roll tube ends (52),
**characterized in that**
the bending moments in the region of the two roll tube ends (52) are in each case introduced via at least two different radial positions within the roll tube (26), a respective roll tube end region (52) in each case being assigned at least two bearing points (32, 34) provided in different radial positions.

2. Spreader roll according to Claim 1,
**characterized in that**
the bearing points (32, 34) assigned to the roll tube end regions (52) can be adjusted appropriately in order to set the curvature of the roll tube (25).

3. Spreader roll according to Claim 2,
**characterized in that**
the bearing points (32, 34) can be adjusted via force elements (36).

4. Spreader roll according to one of the preceding claims,
**characterized in that**
the bearing points (32, 34) of a respective roll tube end region (52) can be pivoted about a common pivot axis (38) from a neutral position in order to set the curvature of the roll tube (26).

5. Spreader roll according to one of the preceding claims,
**characterized in that**
the stiffness of the roll tube (26) decreases towards the roll tube ends (28).

6. Spreader roll according to Claim 5,
**characterized in that**
in a respective roll tube end region (52), the stiffness decreases axially outwards, starting from the region of an axially inner bearing point (34).

7. Spreader roll according to one of the preceding claims,
**characterized in that**
the stiffness between two bearing points (32, 34) provided in different radial positions in a respective roll tube end region is reduced such that the decrease in the course of the bending moment is at least substantially compensated for and is provided in accordance with an at least substantially uniform curvature of the roll tube (26).

8. Spreader roll according to one of Claims 1 to 6,
**characterized in that**
the stiffness between two bearing points (32, 34) provided in different radial positions in a respective roll tube end region (52) is reduced disproportionately such that the result is an increased curvature in the roll tube end region (52) as compared with the central roll tube region.

9. Spreader roll according to one of the preceding claims,
**characterized in that**
the roll tube (26) consists of fibre-reinforced plastic.

10. Spreader roll according to one of the preceding claims,
**characterized in that**
the stiffness of the roll tube (26) is at least partly set by means of appropriately modified material characteristics.

11. Spreader roll according to one of the preceding claims,
**characterized in that**
the roll tube (26) consists of a homogeneous material, such as metal.

12. Spreader roll according to one of the preceding claims,
**characterized in that**
the stiffness of the roll tube (26) is at least partly set by means of appropriately modified geometric dimensions.

13. Spreader roll according to one of the preceding claims,
**characterized in that**
the roll tube end regions (52) are rotatably mounted via the bearing points (32, 34), in each case on a roll support element (54) which can be pivoted appropriately about a pivot axis (38) in order to set the curvature of the roll tube (26).

## Revendications

1. Rouleau élargisseur (22) pour une machine de fabrication d'une bande de matière (24), en particulier d'une bande de papier ou de carton, avec un rouleau tubulaire (26) et des moyens associés à celui-ci pour introduire des couples de flexion dans la région des deux extrémités (52) du rouleau tubulaire, **caractérisé en ce que** les couples de flexion sont introduits dans la région des deux extrémités (52) du rouleau tubulaire chaque fois au moyen d'au moins deux positions radiales différentes à l'intérieur du rouleau tubulaire (26), dans lequel chaque fois au moins deux points d'appui (32, 34) prévus dans des positions radiales différentes sont associés à une région d'extrémité respective (52) du rouleau tubulaire.

2. Rouleau élargisseur selon la revendication 1, **caractérisé en ce que** les points d'appui (32, 34) associés aux régions d'extrémité (52) du rouleau tubulaire sont déplaçables de façon correspondante pour le réglage de la courbure du rouleau tubulaire (26).

3. Rouleau élargisseur selon la revendication 2, **caractérisé en ce que** les points d'appui (32, 34) sont déplaçables au moyen d'éléments de force (36).

4. Rouleau élargisseur selon l'une quelconque des revendications précédentes, **caractérisé en ce que** les points d'appui (32, 34) d'une région d'extrémité respective (52) du rouleau tubulaire sont aptes à pivoter autour d'un axe de pivotement commun (38) à partir d'une position neutre pour le réglage de la courbure du rouleau tubulaire (26).

5. Rouleau élargisseur selon l'une quelconque des revendications précédentes, **caractérisé en ce que** la raideur du rouleau tubulaire (26) diminue en direction des extrémités (28) du rouleau tubulaire.

6. Rouleau élargisseur selon la revendication 5, **caractérisé en ce que**, dans une région d'extrémité respective (52) du rouleau tubulaire, la raideur diminue axialement vers l'extérieur à partir de la région d'un point d'appui (34) situé axialement à l'intérieur.

7. Rouleau élargisseur selon l'une quelconque des revendications précédentes, **caractérisé en ce que** la raideur entre deux points d'appui (32, 34) prévus dans des positions radiales différentes d'une région d'extrémité respective du rouleau tubulaire est réduite de telle manière que la baisse de l'évolution du couple de flexion soit au moins essentiellement compensée et que de manière correspondante il s'établisse une courbure au moins essentiellement uniforme du rouleau tubulaire (26).

8. Rouleau élargisseur selon l'une quelconque des revendications 1 à 6, **caractérisé en ce que** la raideur entre deux points d'appui (32, 34) prévus dans des positions radiales différentes d'une région d'extrémité respective (52) du rouleau tubulaire est réduite dans une mesure plus que proportionnelle, de telle manière qu'il s'établisse dans la région d'extrémité (52) du rouleau tubulaire une courbure accrue par rapport à la région médiane du rouleau tubulaire.

9. Rouleau élargisseur selon l'une quelconque des revendications précédentes, **caractérisé en ce que** le rouleau tubulaire (26) est constitué d'une matière plastique renforcée par des fibres.

10. Rouleau élargisseur selon l'une quelconque des revendications précédentes, **caractérisé en ce que** la raideur du rouleau tubulaire (26) est réglée au moins en partie par des propriétés de la matière modifiées de façon correspondante.

11. Rouleau élargisseur selon l'une quelconque des revendications précédentes, **caractérisé en ce que** le rouleau tubulaire (26) est constitué d'une matière homogène comme par exemple un métal.

12. Rouleau élargisseur selon l'une quelconque des revendications précédentes, **caractérisé en ce que** la raideur du rouleau tubulaire (26) est réglée au moins en partie par des dimensions géométriques modifiées de façon correspondante.

13. Rouleau élargisseur selon l'une quelconque des revendications précédentes, **caractérisé en ce que** les régions d'extrémité (52) du rouleau tubulaire sont appuyées de façon rotative au moyen des points d'appui (32, 34) respectivement sur un élément d'appui de rouleau (54), qui est apte à pivoter de manière correspondante autour d'un axe de pivotement (38) pour le réglage de la courbure du rouleau tubulaire (26).
